(19) Europäisches Patentamt
European Patent Office
Office européen des brevets

(11) Veröffentlichungsnummer: **0 303 931**
**A2**

(12) # EUROPÄISCHE PATENTANMELDUNG

(21) Anmeldenummer: **88112882.1**

(22) Anmeldetag: **08.08.88**

(51) Int. Cl.4: **C08G 63/64 , C08G 63/60 , C08G 63/38**

(30) Priorität: **20.08.87 DE 3727730**

(43) Veröffentlichungstag der Anmeldung: **22.02.89 Patentblatt 89/08**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Pielartzik, Harald, Dr.**
**Doerperhofstrasse 39**
**D-4150 Krefeld(DE)**
Erfinder: **Ebert, Wolfgang, Dr.**
**Doerperhofstrasse 31**
**D-4150 Krefeld(DE)**
Erfinder: **Meyer, Rolf-Volker, Dr.**
**Buchheimer Strasse 23**
**D-4150 Krefeld(DE)**
Erfinder: **Traenckner, Hans-Joachim, Dr.**
**Wedelstrasse 46**
**D-4150 Krefeld(DE)**
Erfinder: **Ostlinning, Edgar, Dr.**
**Rembrandtstrasse 37**
**D-4000 Düsseldorf(DE)**

(54) **Verfahren zur Herstellung von vollaromatischen, thermotropen Polyestern und Polyestercarbonaten.**

(57) Thermotrope, vollaromatische Polyester und Polyestercarbonate werden hergestellt durch Veresterung von gegebenenfalls substituierten p-Hydroxybenzoesäuren und aromatischen Dicarbonsäuren mit Diarylcarbonat bei Temperaturen von 100 bis 200 °C und anschließender Umesterung der erhaltenen Arylester mit Diphenolen und gegebenenfalls weiterem Diarylcarbonat unter Polykondensation bei Temperaturen von 250 bis 330 °C, wobei man die Veresterung, die Umesterung und die Polykondensation in Gegenwart von heterocyclischen Verbindungen mit 1 bis 3 Stickstoffatomen durchführt.

EP 0 303 931 A2

## Verfahren zur Herstellung von vollaromatischen, thermotropen Polyestern und Polyestercarbonaten

Die Erfindung betrifft ein Verfahren zur Herstellung von thermotropen, vollaromatischen Polyestern und Polyestercarbonaten.

Thermotrope bzw. mesomorphe aromatische Polyester und Polyestercarbonate, die zur Herstellung von Formkörpern, Filamenten, Fasern und Folien verwendet werden, werden beispielsweise beschrieben in der DE-OS 33 25 704 und in der DE-OS 34 15 530. In den genannten Offenlegungsschriften wird auch der Begriff "mesomorph" bzw. "thermotrop" erläutert. Außerdem wird dort auch die übliche Untersuchungsmethode des flüssigkristallinen Zustandes von Polymerschmelzen dargelegt.

Die in den genannten Offenlegungsschriften beanspruchten thermotropen vollaromatischen Polyester auf Basis von gegebenenfalls substituierter p-Hydroxybenzoesäure, Isophthalsäure und gegebenenfalls Terephthalsäure, Hydrochinon und/oder 4,4′-Dihydroxydiphenyl sowie 3,4′- und/ oder 4,4′-Dihydroxybenzophenon oder die beanspruchten mesomorphen aromatischen Polyestercarbonate auf Basis von gegebenenfalls substituierter p-Hydroxybenzoesäure, Diphenol, Kohlensäure und gegebenenfalls aromatischer Dicarbonsäure können nach verschiedenen Verfahren hergestellt werden, z.B. durch Veresterung und Umesterung der reaktiven Derivate der Ausgangsverbindungen und durch anschließende Polykondensation. Bei diesen Verfahren ist es zweckmäßig sowohl die Ver- bzw. Umesterungsreaktionen als auch die Polykondensationsreaktionen katalytisch zu beschleunigen. Als Katalysatoren werden üblicherweise eingesetzt die Oxide, Hydride, Hydroxide, Halogenide, Alkoholate, Phenolate der Alkalimetalle oder Erdalkalimetalle, die Alkali- oder Erdalkalimetallsalze anorganischer oder organischer Säuren, die Komplexsalze oder Mischsalze der Erdalkalimetalle, der Nebengruppenelemente, wie Vanadium, Titan, Mangan, Propan, Nickel, Zink, Lanthan, Cer, Zirkonium oder der Elemente aus anderen Gruppen des Periodensystems, wie Germanium, Zinn, Blei und Antimon oder auch die Alkalimetalle oder Erdalkalimetalle selbst. Genannt seien: Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Titantetrabutylat, Titantetrapropylat, Zirkoniumbutylat, Zirkoniumpropylat, Titantetraphenolat, Natriumphenolat, Germaniumdioxid, Antimontrioxid, Di-butyl-zinn-diacetat sowie Dibutyldimethoxy-zinn.

Nachteilig bei den zuvor genannten Verfahren ist, daß die metallhaltigen Katalysatoren nicht aus dem Reaktionsgemisch zu entfernen sind und eine unerwünschte Nachpolymerisation bei der Verarbeitung der Polymermassen nicht zu vermeiden ist. Weiterhin ist nachteilig, daß die Produkte eine unzureichende thermische Stabilität besitzen und unter Verarbeitungsbedingungen einen hohen Gewichtsverlust erleiden. Außerdem kann bei den Verfahren des Standes der Technik durch die hohen Reaktionstemperaturen in der Anfangsphase die Decarboxylierung von p-Hydroxybenzoesäure auftreten (Indian J. Chem. 10, 1011-1013, 1972). Gleichermaßen kann bei zu hohen Reaktionstemperaturen das eingesetzte Diarylcarbonat Umlagerungen nach Kolbe-Schmitt sowie uneinheitliche verlaufende Zersetzungsreaktion erleiden (A. Davis, J. Chem. Soc. (B) 1968, 40, H. Schnell, Chemistry and Physics of Polycarbonates, Interscience London 1964).

Ein weiterer Nachteil der Verfahren des Standes der Technik ist, daß Produkte mit hohen Gehalten (>70 Mol-%) an einkondensierter p-Hydroxybenzoesäure inhomogen bzw. stark verfärbt sind.

In der DE-OS 21 64 473 wird bei der Abhandlung des Standes der Technik darauf hingewiesen, daß die Verwendung von tertiären Aminen als Katalysatoren bei der Herstellung von Polyestern aus p-Acetoxybenzoesäuremethylester entsprechend der US-PS 30 39 994 mit Nachteilen behaftet ist, da lange Reaktionszeiten erforderlich sind und stark gefärbte Polymere gebildet werden.

In der DE-AS 12 80 240 wird die Verwendung von tautomeriefähigen, 5-gliedrigen aromatischen N-Heterocyclen mit 2 oder mehr Heteroatomen, gegebenenfalls zusammen mit den Oxiden der Metalle der IV., V. und VI. Haupt-und Nebengruppe des Periodensystems als Katalysatoren für die Umsetzung aromatischer Dicarbonsäuren mit 1,2-Dioxa-cycloalkan-2-onen zu monomeren Bis-hydroxyalkylestern der eingesetzten Säuren beschrieben. Es wird hervorgehoben, daß die tautomeriefähigen 5-gliedrigen aromatischen N-Heterocyclen eine wesentlich bessere katalytische Wirksamkeit besitzen als die bekannten Katalysatoren bei der Herstellung von monomeren Bis-hydroxyalkylestern.

Es wurde nun ein Verfahren zur Herstellung von thermotropen, vollaromatischen Polyestern und Polyestercarbonaten durch Veresterung von gegebenenfalls substituierten p-Hydroxybenzoesäuren und aromatischen Dicarbonsäuren mit Diarylcarbonat bei Temperaturen von 100 bis 240 °C und anschließende Umesterung der erhaltenen Arylester mit Diphenolen und gegebenenfalls weiterem Diarylcarbonat unter Polykondensation bei Temperaturen von 250 bis 350 °C gefunden, das dadurch gekennzeichnet ist, daß man die Veresterung, die Umesterung und die Polykondensation in Gegenwart von heterocyclischen Verbindungen mit 1 bis 3 Stickstoffatomen durchführt.

Das erfindungsgemäße Verfahren wird bevorzugt nach einem Eintopfverfahren durchgeführt, dergestalt,

daß die Veresterung, die Umesterung und die Polykondensationsreaktion in einem Reaktionsgefäß ohne Isolierung der Zwischenstufen erfolgt.

Die Veresterung von gegebenenfalls substituierten p-Hydroxybenzoesäuren und die Veresterung von aromatischen Dicarbonsäuren mit Diarylcarbonat wird bevorzugt bei Temperaturen von 130 bis 220 °C durchgeführt. Die Veresterung (Derivatisierung) der Carboxylgruppen der eingesetzten aromatischen Carbonsäuren durch Umsetzung mit Diarylcarbonat erfolgt unter Abspaltung von Kohlendioxid und Phenol unter Bildung der entsprechenden Arylester.

Die Veresterung beginnt man zunächst bei tieferen Temperaturen (etwa 100 bis 160 °C) und steigert allmählich die Temperatur bei nachlassender Kohlendioxidabspaltung auf etwa 180 bis 220 °C.

Nach dem Ende der Kohlendioxidabspaltung wird die Reaktionstemperatur auf 250 bis 330 °C, bevorzugt 270 bis 320 °C gesteigert, wobei die Polykondensation unter Umesterung der Arylester mit den Diphenolen und gegebenenfalls weiterem Diarylcarbonat zu hochmolekularen Polyester- oder Polyestercarbonaten erfolgt. Auch bei der Polykondensations- und Umesterungsreaktion beginnt man zunächst bei tieferen Temperaturen (etwa 250 bis 270 °C) und steigert dann allmählich die Reaktionstemperatur auf 300 bis 330 °C bei Nachlassen der Phenolabspaltung.

Zur Erleichterung der Phenolabspaltung bei der Umesterungs- und der Polykondensationsreaktion kann bei einer Temperatur von 250 °C bereits ein leichtes Vakuum von etwa 800 bis 300 mbar, bevorzugt 700 bis 400 mbar, angelegt werden. Zur Erreichung des gewünschten Polykondensationsgrades wird, wie erwähnt, bei Nachlassen der Reaktionsgeschwindigkeit (Phenolabspaltung) die Temperatur erhöht, wobei gleichzeitig der Druck im Reaktor kontinuierlich von ca. 200 mbar bis auf ca. 0,1 mbar, bevorzugt von 100 mbar bis auf 0,1 mbar erniedrigt wird.

Das bei dem erfindungsgemäßen Verfahren bei der Umesterung bzw. Polykondensation erhaltene Phenol, fällt in besonders großer Reinheit an und kann daher ohne besondere Reinigung in andere Prozeßkreisläufe rückgeführt werden, z.B. in den Herstellungsprozeß von Diphenylcarbonat.

Als heterocyclische Verbindungen mit 1 bis 3 Stickstoffatomen, die erfindungsgemäß die Veresterung, die Umesterung und die Polykondensationsreaktions katalysieren, kommen in Betracht: Imidazol, 4,5-Diphenyl-1H-imidazol-1,10-Phenanthrolin, 2,2′-Bipyridyl, 1H-Benzimidazol, 1,2-Dimethyl-1H-benzimidazol, 2-Methyl-1H-imidazol, 1-Methyl-1H-imidazol, 1H-Pyrazol, 4-Dimethylaminopyridin, 4-Pyrrolidino-pyridin, 1,8-Bis-(dimethylamino)-naphthalin, 1,8-Diazabicyclo-5,4,0-undec-7-en, 1,8-Diazabicyclo-4,3,0-non-5-en, 1,4-Diazabicyclo-2,2,2-octan und/oder 1,4,5,6-Tetrahydro-1,2-dimethylpyrimidin. Vorzugsweise werden die obengenannten Imidazole eingesetzt, besonders bevorzugt Imidazol selbst.

Der Katalysator wird erfindungsgemäß in einer Konzentration von etwa 0,01 bis 5 Gew.-%, bevorzugt 0,1 bis 2,5 Gew.-%, bezogen auf die eingesetzten Carbonsäuren, eingesetzt.

Nach dem erfindungsgemäßen Verfahren können als p-Hydroxybenzoesäuren solche eingesetzt werden, die gegebenenfalls durch $C_1$-$C_4$-Alkyl (bevorzugt Methyl, Ethyl), $C_1$-$C_4$-Alkoxy (bevorzugt Methoxy, Ethoxy, Propoxy), $C_6$-$C_{12}$-Aryl (bevorzugt Phenyl, Naphthyl, Biphenyl) $C_6$-$C_{10}$-Alkylaryl (bevorzugt Phenyl, Tolyl, Naphthyl) und/oder durch Halogen (bevorzugt Chlor, Brom) kernsubstituiert sind. Beispielsweise werden genannt: 4-Hydroxy-2-methylbenzoesäure, 4-Hydroxy-3-methylbenzoesäure, 2-Ethyl-4-hydroxybenzoesäure, 3-Ethyl-4-hydroxybenzoesäure, 2- oder 3-Chlor-4-hydroxybenzoesäure, 4-Hydroxy-3-phenylbenzoesäure, 4-Hydroxy-3-phenylbenzoesäure oder p-Hydroxybenzoesäure, bevorzugt p-Hydroxybenzoesäure.

Als aromatische Dicarbonsäuren können in das erfindungsgemäße Verfahren solche eingesetzt werden, die 8 bis 24, vorzugsweise 8 bis 14, C-Atome besitzen und die durch $C_1$ bis $C_4$-Alkylreste, wie Methyl, Ethyl, $C_1$ bis $C_4$-Alkoxyreste, wie Methoxy, Ethoxy, Propoxy, und/oder durch Halogenatome, wie Chlor und Brom, substituiert sein können.

Beispielsweise werden als aromatische Dicarbonsäuren genannt: Naphthalin-1,5-dicarbonsäure, Diphenyl-2,2′-dicarbonsäure, Diphenyl-4,4′-dicarbonsäure, Diphenylmethan-4,4′-dicarbonsäure, Diphenylether-4,4′-dicarbonsäure, Diphenylsulfon-4,4′-dicarbonsäure, Terephthalsäure, Isophthalsäure und Naphthalin-2,6-dicarbonsäure, vorzugsweise Terephthalsäure, Isophthalsäure und Naphthalin-2,6-dicarbonsäure.

Als Derivate zur Herstellung der Arylester aus den entsprechenden Carbonsäuren sowie zum Einbau von Carbonatgruppen kommen in Frage: Diarylcarbonate, wie Diphenylcarbonate, Ditolylcarbonat, Phenyltolylcarbonat und Dinaphthylcarbonat. Vorzugsweise wird Diphenylcarbonat eingesetzt.

Als Diphenole können in das erfindungsgemäße Verfahren Verbindungen der Formel

HO - Z - OH (I)

eingesetzt werden,

worin Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind, wie

(1) Hydrochinon, Methylhydrochinon, 1,5-Dihydroxynaphthalin, 2,6-Dihydroxynaphthalin, 4,4′-Dihydroxydiphenyl, die zu keiner wesentlichen Winkelung der Polykondensatkette führen, und

(2) Verbindungen, die zu einer wesentlichen Winkelung der Polykondensatkette beitragen, wie Resorcin, 1,6-Dihydroxynaphthalin, 2,5-Dihydroxynaphthalin, 2,7-Dihydroxynaphthalin und Bisphenole der Formel

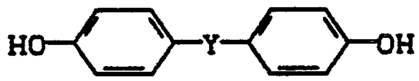

(II),

in der
Y einen Alkylen- oder Alkylidenrest mit 1 - 7 C-Atomen, einen Cycloalkylen- oder Cycloalkylidenrest mit 5 - 12 C-Atomen, -O-, - $\underset{O}{\underset{\|}{S}}$ -,
-S-, $-SO_2-$, oder - $\underset{O}{\underset{\|}{C}}$ -
bedeutet,
sowie deren kernalkylierte und kernhalogenierte Derivate, z.B.
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
4,4′-Bis-(hydroxyphenyl)-diisopropylbenzole.

Insbesondere werden als Diphenole der Formel (II) genannt:
Bis-(4-hydroxyphenyl)-methan,
1,1-Bis-(4-hydroxyphenyl)-ethan,
Bisphenol A,
1,1-Bis-(4-hydroxyphenyl)-cyclohexan,
Bis-(4-hydroxyphenyl)-sulfon,
4,4′-Dihydroxydiphenylether und
4,4′-Dihydroxydiphenylsulfid.

Es empfiehlt sich, die Diphenole derart auszuwählen, daß maximal 30 Mol-%, bezogen auf die Gesamtmenge an Diphenolresten, Diphenolreste der Gruppe (2) sind. Dabei ist ein hoher Anteil an Diphenolresten der Gruppe (2) insbesondere dann vertretbar, wenn er durch zusätzliche lineare Reste, wie Terephthalsäurereste, kompensiert wird.

Nach dem erfindungsgemäßen Verfahren werden die eingesetzten Reaktionskomponenten, d.h. die gegebenenfalls substituierte p-Hydroxybenzoesäure (a), das Diphenol (b), die Dicarbonsäure (c) und das Diarylcarbonat (d) im gewünschten Verhältnis untereinandergemischt. Dabei wird die benötigte Menge an Diarylcarbonat wie folgt berechnet:

a) gegebenenfalls substituierte p-Hydroxybenzoesäure
b) Diphenol
c) Dicarbonsäure
d) Diarylcarbonat $[d] = [a] + 2\,[c] + ([b] - [c])$

Das Diarylcarbonat dient bei dem erfindungsgemäßen Verfahren zum einen als Reagenz zur Bildung der entsprechenden Carbonsäurearylester und zum anderen für die Bildung der Carbonatgruppen für den Fall, daß Polyestercarbonate hergestellt werden sollen.

Das Äquivalentverhältnis Diarylcarbonat/Carbonsäurederivat beträgt daher mindestens 1:1, vorzugsweise 1,01 bis 1,1:1.

Wie aus dem Term ([b] - [c]) hervorgeht, wird über das Äquivalentverhältnis von Dicarbonsäure zu Diphenol der Gehalt an einkondensierten Carbonatgruppen bestimmt.

Gelegentlich wird eine Molekulargewichtsregelung erwünscht, die durch die Polykondensationsreaktionen abbrechende, monofunktionelle Verbindungen erreicht werden kann.

Monofunktionelle Verbindungen in diesem Sinne sind monofunktionelle Carbonsäuren, vorzugsweise aromatische Carbonsäuren wie Benzoesäure, Chlorbenzoesäuren, Methylbenzoesäuren, Naphthalincarbonsäuren oder Diphenylcarbonsäuren, monofunktionelle aromatische Hydroxyverbindungen wie Phenol, Methylphenole, Ethylphenole, n-Nonylphenol, p-Chlorphenol, 4-(1,1-Dimethylpropyl)phenol, 4-(1,1,3,3-Tetramethylbutyl)-phenol, Dodecylphenole, Dimethylphenol, Hydroxynaphthaline und monofunktionelle Thiophenole wie Thiophenol, 4-Methylthiophenol. Bevorzugt wird 4-Hydroxybiphenyl verwendet.

Als Endgruppen können die erfindungsgemäßen Polyestercarbonate -H, -OH, $-OC_6H_5$ oder von Kettenabbrechern herrührende Reste enthalten.

Nach dem erfindungsgemäßen Verfahren können thermotrope, vollaromatische Polyester und Polyestercarbonate auf Basis von

a) gegebenenfalls substituierter p-Hydroxybenzoesäure

b) Diphenol,

c) aromatischer Dicarbonsäure und gegebenenfalls

d) Kohlensäure, hergestellt werden, wobei die Polyester und Polyestercarbonate den einkondensierten Rest

a) in einer Konzentration von 30 bis 95, vorzugsweise 65 bis 90, insbesondere 70 bis 85 Mol-%,
den einkondensierten Rest

b) in einer Konzentration von 0 bis 70, vorzugsweise 0 bis 40, insbesondere 0 bis 30 Mol-%,
den einkondensierten Rest,

c) in einer Konzentration von 0 bis 70, vorzugsweise 0 bis 30, insbesondere 0 bis 30 Mol-%,
und den einkondensierten Rest

d) in einer Konzentration von 5 bis 70, vorzugsweise 10 bis 35, insbesondere 15 bis 30 Mol-%,
jeweils bezogen auf die Summe der einkondensierten Reste a bis d enthalten. Das Molverhältnis der einkondensierten Reste beträgt: $a+b = 1$; $b = c+d$;

$$0 \leq \frac{d}{c+d} \leq 1 .$$

Die nach dem erfindungsgemäßen Verfahren hergestellten thermotropen Polyester und Polyestercarbonate besitzen in der Regel eine inhärente Viskosität von mindestens 1,0 dl/g (gemessen an einer Lösung von 5 mg Polymer/in ml Pentafluorphenol bei 60 °C). Sollten die Produkte in den genannten Lösungsmitteln unlöslich sein, wird angenommen, daß sie die angegebene Mindestviskosität besitzen.

Zur Erhöhung der Molekulargewichte können die Produkte - vorzugsweise in Granulatform - einer Festphasennachkondensation unter Inertgas oder unter Vakuum bei Temperaturen von 150 - 300 °C unterworfen werden.

Die nach dem erfindungsgemäßen Verfahren hergestellten thermotropen Polyester und -carbonate können infolge ihrer relativ geringen Schmelzviskosität vorteilhaft aus der Schmelze zu Spritzgußformteilen, Fasern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, d.h., daß die Schmelzviskosität bei Erhöhung der Schwerkräfte stark abfällt.

Ein weiteres wesentliches Merkmal der nach dem erfindungsgemäßen Verfahren hergestellten thermotropen Polyester und Polyestercarbonate ist die hohe Wärmeformbeständigkeit, gemessen nach HDT-A von 170-250 °C.

Aus den erfindungsgemäßen Polyestern und Polyestercarbonaten können Formteile hoher Zugfestigkeit, außerordentlicher Zähigkeit und großer Dimensionsstabilität hergestellt werden. Da die Polyester und -carbonate außerordentlich chemikalienresistent und flammwidrig sind, eignen sie sich bevorzugt zur Herstellung von

- elektrotechnischen Artikeln, wie Isolatoren, gedruckten Schaltungen, Steckkontakte, Armaturenteile
- Teilen chemisch-technischer Apparate, wie Rohre, Behälterauskleidungen, Rotoren, Gleitlager, Dichtungen
- Teilen der Flugzeuginnenausstattung
- Teilen medizinisch-technischer Geräte,
- Bauteilen von Klimaanlagen und Ventilteilen.

Durch das erfindungsgemäße Verfahren werden Zersetzungsreaktionen, die zu Verfärbungen der polymeren Produkte führen, vermieden. Weiterhin wird das abgespaltene Phenol in einer Reinheit erhalten, die es ermöglicht, das Phenol in andere Prozeßkreisläufe, wie die Herstellung von Diphenylcarbonat zurückzuführen. Außerdem ist es bei dem erfindungsgemäßen Verfahren nicht mehr erforderlich, die Katalysatoren aus dem Reaktionsgemisch zu entfernen, um unerwünschte Nebenreaktionen zu vermeiden.

Durch den Einsatz der erfindungsgemäßen Katalysatoren wird die Bildung der Phenylester bei tiefer

Temperatur stark beschleunigt, so daß Zersetzungsreaktionen von Ausgangsprodukten, z.B. Decarboxylierung von p-Hydroxybenzoesäure, vermieden wird.

Darüber hinaus wird durch den Einsatz der erfindungsgemäßen Katalysatoren die Polykondensation von p-Hydroxybenzoesäurephenylester dermaßen beschleunigt, daß bei den höheren Reaktionstemperaturen praktisch kein p-Hydroxybenzoesäurephenylester mit abdestilliert. Dadurch gelingt die Herstellung von Polyestern und Polyestercarbonaten mit einem besonders hohen Anteil an p-Hydroxybenzoesäure. Auch ist es bei dem erfindungsgemäßen Verfahren nicht erforderlich Co-Katalysatoren einzusetzen. Durch die hohe Aktivität und Selektivität der erfindungsgemäß eingesetzten Katalysatoren gestaltet sich das Verfahren zur Herstellung von thermotropen, vollaromatischen Polyestern und Polyestercarbonaten besonders wirtschaftlich.

Darüber hinaus war es für den Fachmann besonders überraschend, daß es nach dem erfindungsgemäßen Verfahren gelingt, Polyester und Polyestercarbonate mit hohem Molekulargewicht und großer thermischer Stabilität herzustellen, die hohe Gehalte an einkondensierter p-Hydroxybenzoesäure besitzen, da nach der DE-AS 32 80 240 aufgrund der besonderen katalytischen Wirksamkeit der eingesetzten N-Heterocyclen erwartet werden mußte, daß die so hergestellten Produkte erhebliche Mängel bezüglich der Stabilität und Farbe aufweisen würden.

Die folgenden Beispiele sollen das erfindungsgemäße Verfahren verdeutlichen ohne es jedoch auf diese Beispiele einzuschränken.

Beispiel 1

In einem Reaktionsgefäß mit Rührer, Kolonne und Destillierbrücke wurden 322,9 g 4-Hydroxybenzoesäure, 66 g Hydrochinon, 11,2 g 4,4′-Dihydroxydiphenyl, 39,8 g Isophthalsäure, 707,2 g Diphenylcarbonat und 1,45 g Imidazol eingewogen. Bei einer Innentemperatur von 160 °C begann die $CO_2$-Abspaltung. die Innentemperatur wurde im Verlauf von 15 Min. auf 180 °C erhöht, 60 Min. konstant gehalten, auf 220 °C erhöht und bis zum Ende der $CO_2$-Entwicklung konstant gehalten. Das Reaktionsgemisch wurde auf 250 °C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275 °C und anschließend auf 300 °C erhöht werden konnte. Nachdem die Phenolabspaltung weitgehend abgeschlossen war, wurde der Druck im Reaktionsgefäß auf 0,2 mbar erniedrigt. Nach 1 h unter diesen Kondensationsbedingungen war die Reaktion beendet. Das erhaltene produkt war von heller Farbe und wies eine ausgeprägte Faserstruktur auf. Es wurde bei einer Massetemperatur von T = 330 °C und einer Formtemperatur von 70 °C verspritzt. Die inhärente Viskosität $\eta_{inh}$ betrug 1,97 dl/g.

Beispiel 2

In einem Reaktionsgefäß mit Rührer, Kolonne und Destillierbrücke wurden 344,4 g 4-Hydroxybenzoesäure, 70,4 g Hydrochinon, 11,9 g 4,4′-Dihydroxydiphenyl, 698,5 g Di phenylcarbonat und 1,41 g Imidazol eingewogen. Bei einer Innentemperatur von 160 °C begann die $CO_2$-Abspaltung. Die Innentemperatur wurde im Verlauf von 15 Min. auf 180 °C erhöht, 60 Min. konstant gehalten, auf 220 °C erhöht und bis zum Ende der $CO_2$-Entwicklung konstant gehalten. Das Reaktionsgemisch wurde auf 250 °C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275 °C und anschließend auf 300 °C erhöht werden konnte. Nachdem die Phenolabspaltung weitgehend abgeschlossen war, wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T = 350 °C und einer Formtemperatur von 70 °C verspritzt.

Beispiel 3

In einem Reaktionsgefäß mit Rührer, Kolonne und Destillierbrücke wurden 355,5 g 4-Hydroxybenzoesäure, 72,7 g Hydrochinon, 12,3 g 4,4′-Dihydroxydiphenyl, 20,4 g Terephthalsäure, 93,2 g Isophthalsäure, 879,7 g Diphenylcarbonat und 2,40 g 4,5-Diphenyl-1H-imidazol eingewogen. Bei einer Innentemperatur wurde im Verlauf von 15 Min. auf 180 °C erhöht, 60 Min. konstant gehalten, auf 220 °C erhöht und bis zum

Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war, wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=340°C und einer Formtemperatur von 70°C verspritzt.

Beispiel 4

In einem Reaktionsgefäß mit Rührer, Kolonne und Destillierbrücke wurden 341,9 g 4-Hydroxybenzoesäure, 72,7 g Hydrochinon, 20,7 g dihydroxydiphenyl, 721,1 g Diphenylcarbonat und 1,46 g Imidazol eingewogen. Bei einer Innentemperatur von 160°C begann die $CO_2$-Abspaltung. Die Innentemperatur wurde im Verlauf von 15 Min. auf 180°C erhöht, 60 Min. konstant gehalten, auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war, wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=330°C und einer Formtemperatur von 70°C verspritzt. Die inhärente Viskosität $\eta_{inh}$ betrug 2,63 dl/g.

Beispiel 5

In einem Reaktionsgefäß mit Rührer, Kolonne und Destillierbrücke wurden 341,8 g 4-Hydroxybenzoesäure, 72,7 g Hydrochinon, 30,7 g 4,4′-Dihydroxydiphenyl, 27,4 g Terephthalsäure, 109,7 g Isophthalsäure, 897,8 g Diphenylcarbonat und 1,95 g 2-Methylimidazol eingewogen. Bei einer Innentemperatur von 160°C begann die $CO_2$-Abspaltung. Die Innentemperatur wurde im Verlauf von 15 Min. auf 180°C erhöht, 60 Min. konstant gehalten, auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war, wurde der Druck im Reaktionsgefäß auf 0,2 mbarr erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=340°C und einer Formtemperatur von 70°C verspritzt.

Beispiel 6

In einem Reaktionsgefäß mit Rührer, Kolonne und Destillierbrücke wurden 331,5 g 4-Hydroxybenzoesäure, 49,5 g Hydrochinon, 27,9 g 4,4′-Dihydroxydiphenyl, 49,8 g Isophthalsäure, 786,6 g Diphenylcarbonat und 1,56 g Imidazol eingewogen. Bei einer Innentemperatur von 160°C begann die $CO_2$-Abspaltung. Die Innentemperatur wurde im Verlauf von 15 Min. auf 180°C erhöht, 60 Min. konstant gehalten, auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=340°C und einer Formtemperatur von 70°C verspritzt.

Beispiel 7

In einem Reaktionsgefäß mit Rührer, Kolonne und Destillierbrücke wurden 341,8 g 4-Hydroxybenzoesäure, 72,7 g Hydrochinon, 30,7 g 4,4′-Dihydroxydiphenyl, 27,4 g Terephthalsäure, 757,1 g Diphenylcarbonat und 1,54 g Imidazol eingewogen. Bei einer Innentemperatur von 160°C begann die $CO_2$-Abspaltung. Die Innentemperatur wurde im Verlauf von 15 Min. auf 180°C erhöht, 60 Min. konstant gehalten, auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=330°C und einer Formtemperatur von 70°C verspritzt.

Beispiel 8

In einem Reaktionsgefäß mit Rührer, Kolonne und Destillierbrücke wurden 209,8 g 4-Hydroxybenzoesäure, 31,4 g Hydrochinon, 17,7 g 4,4′-Dihydroxydiphenyl, 15,8 g Terephthalsäure, 435,5 g Diphenylcarbonat und 1,65 g Dimethylaminopyridin eingewogen. Bei einer Innentemperatur von 160°C begann die $CO_2$-Abspaltung. Die Innentemperatur wurde im Verlauf von 15 Min. auf 180°C erhöht, 60 Min. konstant gehalten, auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt.

Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstruktur auf. Es wurde bei einer Massetemperatur von T=340°C und einer Formtemperatur von 70°C verspritzt.

Die nachfolgende Tabelle gibt einen Überblick über die mechanischen Eigenschaften der LC-Polymeren der Beispiele 1 bis 8.

| Bsp. | Schlag-/Kerbschlagzähigkeit ($kJ/m^2$) | | Reißfestigk, MPa | Zug-E-Modul MPa | Biegefestigk, MPa | Beige-E-Modul MPa | Wärmeformbeständigk, HDT-A (°C) |
|---|---|---|---|---|---|---|---|
| 1 | 50 | 30 | 200 | 18 900 | 140 | 7050 | 190 |
| 2 | 78 | 33 | 163 | 15 400 | 150 | 6570 | 230 |
| 3 | 75 | 45 | 158 | 19 500 | 165 | 8300 | 205 |
| 4 | 87 | 40 | 178 | 12 870 | 103 | 4730 | 180 |
| 5 | 45 | 35 | 210 | 18 300 | 173 | 7850 | 215 |
| 6 | 67 | 48 | 185 | 16 500 | 128 | 7310 | 204 |
| 7 | 49 | 33 | 149 | 15 360 | 131 | 5770 | 220 |
| 8 | 65 | 40 | 140 | 14 700 | 105 | 6800 | 190 |

Die Prüfung der Schlagzähigkeit $a_n$ und Kerbschlagzähigkeit $a_k$ erfolgt an Normkleinstäben gemäß DIN 53 453 (ISO/R 179) bei 23° C jeweils an 10 Prüfkörpern.

Die Bestimmung der Biegefestigkeit wurde an Normkleinstäben gemäß DIN 53 452 (ISO/R 178) durchgeführt. Der Biege-E-Modul wurde gemäß DIN 53 457 ermittelt.

Die Messung der Wärmeformbeständigkeit erfolgte durch Bestimmungen der HDT-A gemäß DIN 53 461 (ISO 75). Das Fließverhalten in der Schmelze wurde durch die Messung der Schmelzviskosität beurteilt. Die Düse hatte, wenn nichts anderes angegeben, ein Längen- zu Dickenverhältnis (L/D) von 30:1.

## Ansprüche

1. Verfahren zur Herstellung von thermotropen, vollaromatischen Polyestern und Polyestercarbonaten durch Veresterung von gegebenenfalls substituierten p-Hydroxybenzoesäuren und aromatischen Dicarbonsäuren mit Diarylcarbonat bei Temperaturen von 100 bis 220° C und anschließender Umesterung der erhaltenen Arylester mit Diphenolen und gegebenenfalls weiterem Diarylcarbonat unter Polykondensation bei Temperaturen von 250 bis 330° C, dadurch gekennzeichnet, daß man die Veresterung, die Umesterung und die Polykondensation in Gegenwart von heterocyclischen Verbindungen mit 1 bis 3 Stickstoffatomen durchführt.

2. Verfahren nach Anspruch 1, dadurch gekennzeichnet, daß man die Veresterung, die Umesterung und die Polykondensation ohne Isolierung von Zwischenprodukten in einem Eintopfverfahren durchführt.

3. Verfahren nach Ansprüchen 1 und 2, dadurch gekennzeichnet, daß man die heterocyclischen Stickstoffverbindungen in einer Menge von 0,01 bis 5 Gew.-%, bezogen auf die eingesetzten Carbonsäuren, einsetzt.

4. Verfahren nach Ansprüchen 1 bis 3, dadurch gekennzeichnet, daß man die heterocyclischen Stickstoffverbindungen in einer Menge von 0,1 bis 2,5 Gew.-%, bezogen auf die eingesetzten Carbonsäuren, einsetzt.

5. Verfahren nach Ansprüchen 1 bis 4, dadurch gekennzeichnet, daß man als heterocyclische Stickstoffverbindungen Imidazol, 4,5-Diphenyl-1H-imidazol, 1,10-Phenanthrolin, 2,2′-Bipyridyl, 1H-Benzimidazol, 1,2-Dimethyl-1H-benzimidazol, 2-Methyl-1H-imidazol, 1-Methyl-1H-imidazol, 1H-Pyrazol, 4-Dimethylaminopyridin, 4-Pyrrolidino-pyridin, 1,8-Bis-(dimethylamino)-naphthalin, 1,8-Diazabicyclo-5,4,0-undec-7-en, 1,8-Diazabicyclo-4,3,0-non-5-en, 1,4-Diazabicyclo-2,2,2-octan und/oder 1,4,5,6-Tetrahydro-1,2-dimethylpyrimidin einsetzt.

6. Verfahren nach Ansprüchen 1 bis 5, dadurch gekennzeichnet, daß man als heterocyclische Stickstoffverbindung Imidazol einsetzt.